# EUROPEAN PATENT APPLICATION

(11) **EP 3 336 112 A1**
(43) Date of publication of application: **20.06.2018**
(21) Application number: 16204936.5
(22) Date of filing: 19.12.2016
(51) Int. Cl.: C08F 120/24, C08F 220/24, C09D 133/16, C09D 133/14

(54) **FLUOROALKYL (METH)ACRYLATE POLYMERS AND COMPOSITIONS**

(71) Applicant: 3M Innovative Properties Company, Saint Paul, MN 55133-3427 (US)
(72) Inventor: Audenaert, Frans, B-2070 Zwijndrecht (BE); Stibe, Dieter Otmar, 41453 Neuss (DE)
(74) Representative: Müller, Bruno

(57) **Abstract**

Fluoroalkyl (meth)acrylate polymers or copolymers are described. These fluoroalkyl (meth)acrylate polymers or copolymers are prepared from at least 96% by weight of one or more fluoroalkyl (meth)acrylate monomers, wherein the fluoroalkyl group has 1 to 6 carbon atoms. The fluoroalkyl (meth)acrylate polymers or copolymers have high molecular weights and glass transition temperatures above room temperature.

## Description

### FIELD

The present disclosure relates to fluoroalkyl (meth)acrylate polymers or copolymers. Specifically, fluoroalkyl (meth)acrylate polymers or copolymers having high molecular weights and glass transition temperatures above room temperature. Compositions containing such materials, methods of using them, and the resulting articles, including coated electronic components, are also described.

### SUMMARY

Briefly, in one aspect, the present disclosure provides a fluoroalkyl (meth)acrylate polymer comprising a polymerization product of at least 96 weight percent of one or more fluoroalkyl (meth)acrylate monomers, wherein the fluoroalkyl group has 1 to 6 carbon atoms. The polymer has a weight average molecular weight of at least 100,000 grams per mole as measured according to the Molecular Weight Procedure and a glass transition temperature of at least 40 °C as measured according to the Glass Transition Temperature Procedure.

In some embodiments, the fluoroalkyl (meth)acrylate polymer comprises a polymerization product of at least 99 weight percent of the one or more fluoroalkyl (meth)acrylate monomers; e.g., a homopolymer of one of the fluoroalkyl (meth)acrylate monomers.

In some embodiments, at least one of the fluoroalkyl (meth)acrylate monomers is a fluoroalkyl methacrylate monomer, e.g., a fluoroalkyl methacrylate monomer having the formula: CₙF₂ₙ₊₁-Q-R₁-O-CO-C(CH₃)=CH₂ wherein: CₙF₂ₙ₊₁ is a perfluorinated alkyl group where n = 1 to 6; Q is a covalent bond or a divalent linking group; and R₁ is a alkylene group having 1 to 4 carbon atoms. In some embodiments, the fluoroalkyl methacrylate monomer is N-methyl perfluorobutyl sulfonamido ethyl methacrylate.

In some embodiments, the polymer has a weight average molecular weight (Mw) of at least 300,000 grams per mole as measured according to the Molecular Weight Procedure. In some embodiments, the polymer has a glass transition temperature of at least 50 °C as measured according to the Glass Transition Temperature Procedure.

In another aspect, the present disclosure provides a composition comprising at least one fluoroalkyl (meth)acrylate polymer according to any of the embodiments described herein dissolved in a fluorinated solvent. In some embodiments, the composition comprises at least 4% by weight of the fluoroalkyl (meth)acrylate polymer dissolved in the fluorinated solvent, based on the total weight of the polymer and the solvent.

In another aspect, the present disclosure provides a method of preparing a coated substrate comprising: applying a composition comprising a fluoroalkyl (meth)acrylate polymer dissolved in a fluorinated solvent according to any of the embodiments described herein on to a surface of the substrate and removing the solvent to form a film of the polymer adhered to the surface. In some embodiments, the substrate comprises one or more electrical components on the surface of the substrate (e.g., a printed circuit board) and the film covers the electrical components.

In yet another aspect, the present disclosure provides a substrate having a first surface and a film of the fluoroalkyl (meth)acrylate polymer according to any of the embodiments described herein adhered to the surface. In some embodiments, the substrate comprises one or more electrical components on the surface of the substrate (e.g., a printed circuit board) and the film covers the electrical components.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

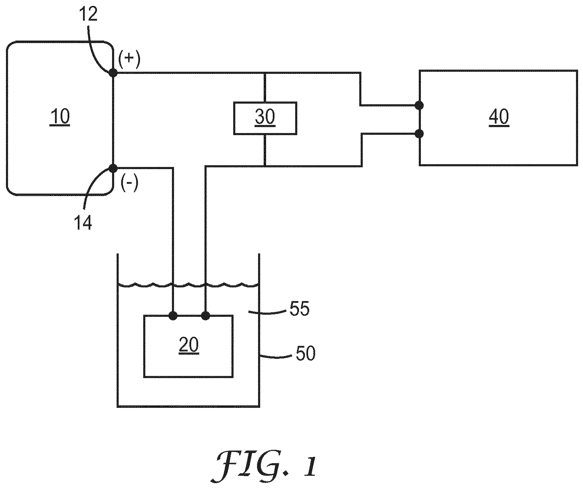

FIG. 1 is a diagram of the test apparatus used in the Coating Reliability Test Procedure.

### DETAILED DESCRIPTION

Fluorinated polymers and copolymers are used in many applications. Some known fluorochemical compositions ultimately degrade to perfluorooctyl-containing compounds when exposed to the environment. It has been reported that certain perfluorooctyl-containing compounds may tend to bio-accumulate in living organisms. Polymers comprising fluoroalkyl acrylates in which the fluoroalkyl group has less than six carbon atoms ultimately degrade to the fluoroalkyl carboxylic acids, fluoroalkyl sulfonic acids (or salts thereof), which are believed to be more effectively eliminated.

EP 1311637 ("Fluoroalkyl (meth)acrylate Copolymer Coating Compositions") describes fluoroalkyl (meth)acrylate copolymer coatings, where the fluoroalkyl group has six carbon atoms or fewer. The fluoroalkyl (meth)acrylate is copolymerized with 5 weight percent or less of (meth)acrylic acid. Preferably, the number average molecular weight (Mn) is from 5,000 to 20,000 grams/mole and Mw/Mn is from 2 to 3, where Mw is the weight average molecular weight. This would lead to a preferable range of Mw of 10,000 to 60,000 grams/mole. The compositions may be dissolved in fluorinated solvents and are said to be suitable for use as barrier coatings to protect substrates such as circuit boards.

Circuit boards have been protected with barrier coatings to minimize or prevent deterioration of the printed circuits and connections from exposure to the environment, including high humidity environments. More recently, printed circuit boards are being used in more aggressive environments and must be protected against even direct immersion in water. Thus, improvements in barrier coatings are desired.

The present inventors discovered that the selection of fluoroalkyl(meth)acrylate polymers having a high molecular weight and a glass transition temperature above room temperature provides the superior water resistance of the compositions of the present disclosure. Generally, fluoroalkyl(meth)acrylate polymers and copolymers have low surface energy and repel water. Without wishing to be bound by any theory, it appears that, during immersion, low molecular weight (short chain) polymers may rearrange leading to a reduction in repellency and poor performance. This phenomenon is more pronounced when the polymer is above its glass transition temperature as the polymer chains have greater freedom of movement.

Generally, the fluoroalkyl(meth)acrylate polymers and copolymers of the present disclosure have a weight average molecular weight (Mw) of at least 100,000 grams/mole. In some embodiments, the Mw is at least 200,000, for example, at least 300,000 grams/mole. Generally, the glass transition temperature (Tg) is at least 40 °C. However, a higher Tg may provide a more robust product as use temperatures may be higher. Therefore, in some embodiments, the Tg is at least 50 °C, or even at least 55 °C.

The solubility of such high molecular weight materials can be a problem. However, the present inventors discovered that by using fluoroalkyl (meth)acrylate copolymers having greater than at least 96 weight percent of one or more fluoroalkyl (meth)acrylate monomers, solutions with sufficient dissolved polymer could be made (e.g., up to 10 wt.% of the copolymer, dissolved in, e.g., a fluorinated solvent).

As used herein, "fluoroalkyl (meth)acrylate" refers collectively to fluoroalkyl acrylates and fluoroalkyl methacrylates. Generally, the fluoroalkyl (meth)acrylate polymers of the present disclosure comprise the polymerization product of at least one fluoroalkyl (meth)acrylate monomer having Formula I:

Rf-Q-R₂-O-CO-C(R₃)=CH₂ (I)

wherein: Rf is a fluorinated alkyl group having 1 to 6 carbon atoms;
R₂ is an alkylene group having 1 to 4 carbon atoms;
R₃ is H or CH₃; and
Q is a covalent bond or a divalent linking group.
In some embodiments, the use of fluoroalkyl methacrylate monomers is preferred, i.e., R₃ is CH₃.

In some embodiments, Rf is a fluorinated alkyl group having the formula R₁-CₙFₓH_{y} wherein: n = 1 to 6; x is at least 1; x + y = 2n; and R₁ is F or H. In some embodiments, Rf is a perfluoroalkyl group, i.e., R₁ is F, x = 2n, and y = 0. Exemplary partially fluorinated alkyl groups include HCF₂CF₂- and CF₃CHF-CF₂-. Exemplary perfluorinated alkyl groups include CF₃-, C₂F₅-, C₃F₇-, C₄F₉-, C₅F₁₁- and C₆F₁₃-.

In some embodiments, Q is simply a covalent bond between the fluorinated alkyl group (Rf) and the alkylene group (R₂). In some embodiments, Q is a divalent linking group. Exemplary divalent linking groups include sulfonamido groups such as those having the general formula: - SO₂N(R₄)-, wherein R₄ is an alkyl group having, e.g., 1 to 4 carbon atoms, e.g., CH₃ or C₂H₅. In some embodiments, Q is an amide group such as those having the general formula -C(O)NH-.

In some embodiments, the fluoroalkyl (meth)acrylate polymers comprise the reaction product of at least 96 weight % (wt.%), e.g., at least 98 wt.%, of one or more fluoroalkyl (meth)acrylate monomers, such as those of Formula I. In some embodiments, the fluoroalkyl (meth)acrylate polymer comprises the reaction product of only one or more fluoroalkyl (meth)acrylate monomers, such as those of Formula I. In some embodiments, the fluoroalkyl (meth)acrylate polymer is a homopolymer resulting from the reaction product of a single fluoroalkyl (meth)acrylate monomer, such as one of those of Formula I.

In some embodiments, a small amount of a copolymerized monomer may be present. Suitable comonomers include acrylic acids, methacrylic acids, acrylates (e.g., butyl acrylate), and methacrylates (e.g., acetoacetoxy methacrylate). Generally, the presence of such comonomers can increase the adhesion to substrates, including printed circuit boards. However, these monomers can also result in reduced solubility in solvents compatible with the coating of printed circuit boards. In some embodiments, the copolymer comprises the reaction product of no greater than 4 wt.% of comonomers (i.e., a monomer other than a fluoroalkyl (meth)acrylate monomer). In some embodiments, the copolymer comprises the reaction product of no greater than 2 wt.%, no greater than 1 wt.%, or even no greater than 0.5 wt.% of such comonomers.

Generally, the polymers are prepared in the presence of a free radical initiator. The resultant polymer may include a group derived from the free radical initiator. The presence of such a group is not considered when calculating the relative weight percents of the comonomers. For example, in some embodiments, the fluoroalkyl (meth)acrylate polymer is a copolymer of Formula II: 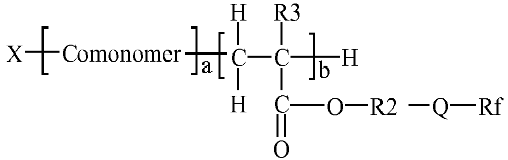
wherein: a and b are selected such that:
   (i) the weight average molecular weight is at least 100,000 grams/mole and
   (ii) the polymer comprises no greater than 4 wt.% of Comonomer;
X is H or a group derived from a free radical initiator; and
R2, R3, Q, and Rf are as defined previously.
That is, R2 is an alkylene group having 1 to 4 carbon atoms; R3 is H or CH₃; Q is a covalent bond or a divalent linking group; and Rf is fluoroalkyl group having 1 to 6 carbon atoms. In some embodiments, Rf is perfluorinated group. In some embodiments, R3 is CH₃, and the copolymer is a methacrylate copolymer. In some embodiments, two or more comonomers may be used, provided the total weight of comonomers is no greater than 4 wt.% based on the total weight of the polymer.

In some embodiments, the fluoroalkyl (meth)acrylate polymer may be dissolved in a solvent to form a coating composition. Although any conventional solvent may be suitable, including both fluorinated and non-fluorinated solvents, in some embodiments, solvents that are non-ozone depleting, non-flammable and fast drying may be preferred. In some embodiments, fluorinated solvents may be used. Among fluorinated solvents, partially fluorinated solvents may be more desirable compared to perfluorinated solvents due to the long atmospheric lifetime of the perfluorocarbons. Suitable partially fluorinated solvents includes hydrochlorofluorocarbons (HCFCs), hydrofluorocarbons (HFCs) and hydrofluoroethers (HFEs).

The term "hydrochlorofluorocarbon" means compounds consisting only of the elements carbon, hydrogen, fluorine and chlorine. Useful HCFCs include CF₃CHCl₂, CH₃CCl₂F, CF₃CF₂CHCl₂ and CClF₂CF₂CHClF. The term "hydrofluorocarbon" means compounds consisting only of the elements carbon, hydrogen and fluorine. Useful HFCs are available under the trade name VERTREL™, available from E. I. duPont de Nemours & Co. and under the trade name ZEORORA-H™, available from Nippon Zeon Co. Ltd., Tokyo, Japan.

As used herein, "hydrofluoroether" means compounds that contain carbon, hydrogen, fluorine and at least one ether oxygen, and that are free of chlorine, bromine and iodine. Suitable hydrofluoroethers are typically liquid at ambient temperature and pressure (about 20 °C and 760 torr) and are non-ozone depleting. Non-flammable hydrofluoroethers (i.e., hydrofluoroethers which do not exhibit a flash point when tested in a closed cup flash point test performed according to ASTM D 56-87) are generally preferred.

One useful class of hydrofluoroethers include alpha-, beta- and omega-substituted hydrofluoroalkyl ethers such as those described in U.S. Patent No. 5,658,962 (Moore et al.), and those described by Marchionni et al. in "Hydrofluoropolyethers," Journal of Fluorine Chemistry 95 (1999), pp. 41-50, which can be described by the general structure:

X-[R_{f}'- O]_{y}R"H

wherein: X is either F, H, or a perfluoroalkyl group containing from 1 to 3 carbon atoms which is optionally hydro-substituted in the omega position;
each R_{f}' is independently selected from the group consisting of -CF₂-, -C₂F₄-, and C₃F₆-,
R" is a divalent organic radical having from 1 to about 3 carbon atoms, and may be perfluorinated, partially fluorinated, or unfluorinated; and
y is an integer from 1 to 7.

Representative examples of hydrofluoroethers include the following compounds: n-C₄F₉OCH₃, n-C₄F₉OCH₂CH₃, CF₃CF(CF₃)CF₂OCH₃, CF₃CF(CF₃)CF₂OC₂H₅, C₈F₁₇OCH₃, CH₃O-(CF₂)₄-OCH₃, C₅F₁₁OC₂H₅, C₃F₇OCH₃ CF₃OC₂F₄OC₂H₅, C₃F₇OCF(CF₃)CF₂OCH₃, (CF₃)₂CFOCH₃, C₄F₉OC₂F₄OC₂F₄OC₂H₅, C₄F₉O(CF₂)₃OCH₃, and 1,1 -dimethoxyperfluorocyclohexane. Suitable HFEs include those available from 3M Company under the trade name NOVEC™.

Generally, the coating compositions of the present disclosure may be applied using conventional coating methods. Common methods for coating printed circuit boards and other substrates include, e.g., dip, spray, drip, capillary and brush methods. The coating process selected may depend on several criteria including part geometry, production volume, budget, throughput speed and coating coverage.

### Examples.

**Table 1: Summary of materials used in the preparation of the examples.**

| Name | Description | |
|---|---|---|
| FA(M)A-1 | N-methyl perfluorobutyl sulfonamide ethyl methacrylate | 3M Company St. Paul, Minnesota, USA |
| | C₄F₉-SO₂N(CH₃)-CH₂CH₂-O-C(O)C(CH₃)=CH₂ | |
| FA(M)A-2 | N-methyl perfluorobutyl sulfonamide ethyl acrylate | 3M Company |
| | C₄F₉-SO₂N(CH₃)-CH₂CH₂-O-C(O)CH=CH₂ | |
| FA(M)A-3 | CHEMINOX FAAC-4 | Unimatic Co. |
| | C₄F₉-CH₂CH₂-O-C(O)CH=CH₂ | Ltd., Japan |
| FA(M)A-4 | CHEMINOX FAMAC-4 | Unimatic Co. |
| | C₄F₉-CH₂CH₂-O-C(O) C(CH₃)=CH₂ | Ltd., Japan |
| FA(M)A-5 | CHEMINOX FAMAC-6 | Unimatic Co. |
| | C₆F₁₃-CH₂CH₂-O-C(O) C(CH₃)=CH₂ | Ltd., Japan |
| CM-1 | HEMAPHOS | 3M Company |
| | (HO)₂-P(O)-O-CH₂CH₂-O-C(O)C(CH₃)=CH₂ | |
| CM-2 | acetoacetoxy methacrylate | Lonza |
| CM-3 | acrylic acid | Rohm & Haas |
| CM-4 | methacrylic acid | BASF |
| CM-5 | phosphate group containing methacrylate monomer | Rodia |
| | SIPOMER PAM-200 | |
| CM-6 | 3-methacryloxypropyl trimethoxysilane | Sigma-Aldrich |
| CM-7 | n-butyl acrylate | BASF |
| CM-8 | vinylphosphonic acid | Sigma-Aldrich |
| CTA | n-octylmercaptan (chain transfer agent) | Sigma-Aldrich |
| Initiator | 2,2'-azobis(3-methylbutyronitrile) (V-59 Initiator) | Wako |
| HFE-1 | C₄F₉OCH₃ (NOVEC 7100 Engineered Fluid) | 3M Company |
| HFE-2 | C₄F₉OC₂H₅ (NOVEC 7200 Engineered Fluid) | 3M Company |

Fluoropolymer Preparation Procedure. The fluorinated polymers were prepared in solvent via radical solution polymerization as follows. A 500 milliliter polymerization bottle was charged with the desired fluoroalkyl (meth)acrylate monomer, optional comonomers and HFE-2 solvent (C₄F₉OC₂H₅). One-half of the desired amount of 2,2'-azobis(3-methylbutyronitrile) (Initiator) was added resulting 0.5 wt.% of the Initiator based on the total weight of the monomers. The bottle was degassed with a waterjet vacuum, followed by breaking the vacuum with a nitrogen atmosphere. This procedure was repeated three times. The polymerization bottle was then run for 16 hours in a preheated Launder-O-meter at 70 °C. After cooling, the other half of the desired amount of the Initiator was added, resulting in an additional 0.5 wt.% of the Initiator based on the total weight of the monomers, for total of 1 wt.% of the Initiator based on the total weight of the monomers. The bottle was again degassed and covered with a nitrogen atmosphere. The bottle was then run for an additional 6 hours in the preheated Launder-O-meter at 70 °C.

Molecular Weight Procedure. Molecular weights were determined using Gel Permeation Chromatography (GPC) performed with a WATERS 515 HPLC pump and an evaporative light scattering detector (ELSD). The following conditions were used:
- Column set: 3 x Mixed bed type B 300 x 7.5 mm 10 micron particles
   (Agilent Technologies)
- Elution solvent: 1,1,1 trifluorotoluene (TFT)
- Flow rate: 1.00 milliliters per minute
- Column temperature: 40 °C
- Injection volume: 100 microliters
- Detector: ALLTECH 3300 Evaporative Light Scattering Detector (ELSD)
   Temperature drift tube: 50 °C
   Gas flow: 1.5 liters/hour nitrogen
- Standards: polystyrene
   10 standards: range 474 Da to 6,700,000 Da
   calibration curve: third order fit
- Chromatography Data Station: EMPPOWER 3 (Waters Corp.)

Glass Transition Temperature Procedure. The glass transition temperature (Tg) was measured according to ASTM D7426-08 (Reapproved 2013), "Standard Test Method for Assignment of the DSC Procedure for Determining Tg of a Polymer or an Elastomeric Compound." Measurements of the glass transition temperature were performed using a differential scanning calorimeter (TA Instruments - Q200), using indium calibration and helium as flushing gas with a flow rate of 50 ml/min. The cooling system of the instrument used liquid nitrogen as the coolant. The samples were dried under full vacuum in an oven at 70 °C for 4 hours. Dried samples (10 - 15 mg) were weighted into a Tzero aluminum sample pan. Dynamic calorimetric scannings were carried out under a constant heating rate of 20 °C/min. The temperature range was -100 °C to 100 °C.

Each sample was scanned twice. The first heating scan removed all thermal history of the sample. The results of the Tg were calculated using the second heating scan. The reported glass transition temperatures are the midpoint temperature as defined in clause 3.2.5 of ASTM D7426-08, i.e., the point on the thermal curve corresponding to one-half the heat flow difference between the extrapolated onset and the extrapolated end.

Fluoroalkyl (meth)acrylate polymers were prepared according to the Fluoropolymer Preparation Procedure. Each sample was a homopolymer of N-methyl perfluorobutyl sulfonamide ethyl methacrylate (FA(M)A-1). In the comparative examples, increasing amounts of the n-octylmercaptan chain transfer agent (CTA) were added. The addition of the CTA was expected to reduce the molecular weight of the resultant polymer. The amount the Initiator (2,2'-azobis(3-methylbutyronitrile)) is reported in grams. For each sample, the initiator was added in two separate charges to provide 0.5 wt.% Initiator per charge based on the total weight of the monomer. The samples were prepared in the HFE-2 solvent. The lower molecular weight comparative examples could be prepared at 30% solids, while the higher molecular weight sample was prepared at 10% solids.

**Table 2: Composition of Example EX-1 and Comparative Examples CE-1, CE-2, and CE-3.**

| | FA(M)A-1 | | CTA | | Initiator (grams) | | Solv. (g) | |
|---|---|---|---|---|---|---|---|---|
| Sample | grams | wt.% | grams | wt.% | Charge 1 | Charge 1 | HFE-2 | % Solids |
| EX-1 | 40.00 | 100.0 | 0 | 0 | 0.20 | 0.20 | 360.0 | 10 |
| CE-1 | 20.00 | 100.0 | 0.10 | 0.5 | 0.060 | 0.060 | 46.9 | 30 |
| CE-2 | 20.00 | 100.0 | 0.20 | 1.0 | 0.061 | 0.061 | 47.1 | 30 |
| CE-3 | 20.00 | 100.0 | 0.40 | 2.0 | 0.061 | 0.061 | 47.6 | 30 |

The molecular weights of these homopolymers were measured according to the Molecular Weight Procedure. Three replicates were tested for EX-1 and the average value is reported. The results are summarized in Table 3.

**Table 3: Molecular weights of Example EX-1 and Comparative Examples CE-1, CE-2, and CE-3.**

| Sample | Mn (g/mole) | Mw (g/mole) | Mw/Mn |
|---|---|---|---|
| EX-1 | 82,000 | 458,000 | 5.6 |
| CE-1 | 23,000 | 79,700 | 3.5 |
| CE-2 | 32,000 | 52,400 | 1.6 |
| CE-3 | 21,200 | 32,400 | 1.5 |

Coating Procedure. The samples prepared according to the Fluoropolymer Preparation Procedure were diluted to various solids levels (e.g., 5 wt.%, 4 wt.% and 2 wt.% solids) with additional HFE-2 solvent to form coating formulations. Samples were dip coated by immersing them horizontally in the coating formulations for 30 seconds and subsequently drying them in a vertical position for 24 hours.

Coating Reliability Test Procedure. This test procedure was used to measure how fast short circuits may occur on a coated printed circuit board (PCB) when it is immersed in deionized water. Test PCBs ("Testkamm für Lackqualifikation 02112004") were obtained from Contag (Berlin, Germany). These PCBs have two electrical circuits with 150 micron wide copper wiring that are 150 microns apart.

Coated PCB samples prepared according to the Coating Procedure were connected to an electrical circuit with 10 Volts DC and a 1 kiloOhm shunt. The voltage was measured using a VINCILAB data-logger with a voltage sensor obtained from the Centre for Microcomputer Applications (Amsterdam, The Netherlands). The voltage was measured over the shunt as a function of time (up to 10 minutes). The measurements were started with the PCB in air for 30 seconds, then the PCB was immersed in double deionized water (electrical resistance > 15 MegaOhms) for the remainder of the time.

This test apparatus is depicted in **FIG. 1****.** Positive terminal **(12)** and negative terminal **(14)** of voltage source **(10)** are connected to data-logger **(40)** across shunt **(30).** Printed circuit board **(20)** is included in the electrical circuit between negative terminal **(14)** and data logger **(40).** Printed circuit board **(20)** is immersed in water **(55)** in container **(50).**

Coated PCB samples were prepared according to the Coating Procedure using compositions containing 1 to 5 wt.% of the high molecular weight fluoroalkyl methacrylate polymer of EX-1. Both the coated PCB samples and a reference sample consisting of an uncoated PCB were tested according to the Coating Reliability Test Procedure.

A short occurred as soon as the uncoated sample was immersed in the water with the voltage rapidly rising toward 10 Volts. Similar results with a rapid short occurred with the 1 wt.%, 2 wt.%, and 3 wt.% solutions of fluoroalkyl methacrylate polymer of EX-1. However, when the concentration of the high molecular weight polymer of EX-1 was increased to 4 wt.%, the voltage increased gradually over time, staying below 4 Volts after 10 minutes. Similar positive results were achieved with the 5 wt.% sample.

Coated PCB samples were prepared according to the Coating Procedure using compositions containing 5 wt.% of the low molecular weight fluoroalkyl methacrylate polymers of comparative examples CE-1, CE-2, and CE-3. The coated PCB samples were tested according to the Coating Reliability Test Procedure. Even at the high concentration of polymer in the coating solution, samples prepared from the low molecular weight fluoroalkyl methacrylate polymer resulted in an immediate short upon immersion in water with a rapid rise toward 10 Volts.

For comparison, the voltages measured across the shunt after 1 minute, 5 minutes, and 10 minutes, as well as the sum of these three values are summarized in Table 4A. When coated at 4 and 5 wt.%, the high molecular weight fluoroalkyl methacrylate polymer showed excellent moisture protection. Not only was the voltage after 10 minutes less than 5 V (less than 4 V), but also the sum of the voltages was less than 15 V (less than 10 V). In contrast, even at 5 wt.%, coatings based on the low molecular weight samples of the same fluoroalkyl methacrylate polymer had poor moisture resistance giving results comparable to the uncoated reference sample.

**Table 4A: Voltage measured according to the Coating Reliability Test Procedure.**

| | Voltage (Volts) | | | |
|---|---|---|---|---|
| Sample | 1 min. | 5 min. | 10 min. | Sum |
| Ref | 8.48 | 9.23 | 9.28 | 27.0 |
| EX-1 at 1 wt.% | 5.97 | 9.02 | 9.13 | 24.1 |
| EX-1 at 2 wt.% | 7.63 | 8.89 | 10.00 | 26.5 |
| EX-1 at 3 wt.% | 7.21 | 8.83 | 8.80 | 24.8 |
| EX-1 at 4 wt.% | 1.21 | 3.06 | 3.95 | 8.2 |
| EX-1 at 5 wt.% | 0.33 | 2.18 | 3.85 | 6.4 |
| CE-1 at 5 wt.% | 8.19 | 8.74 | 8.75 | 25.7 |
| CE-2 at 5 wt.% | 8.08 | 8.77 | 8.81 | 25.7 |
| CE-3 at 5 wt.% | 8.22 | 8.65 | 8.57 | 25.4 |

Insulation Resistance Procedure. The insulation resistance of printed circuit boards coated with various formulations of the present disclosure were measured using a Burster Resistomat Type 2408. The tests were conducted on bare PCBs with the following layout:
- Size: 197.0 mm x 110.0 mm; one-sided
- Material: FR 4 Standard Tg 150 °C, 1.5/1.6 mm; 35 micron Cu
- Structure: ≥150 microns; drill ≥ 0.4 mm
- Printing: Solder resist; green
The voltage was adjusted to 250 V and two electrodes were positioned on the comb structure of the PCB until a stable value was obtained. The measurement was repeated three times, and a mean value was calculated.

Coated PCB samples were prepared according to the Coating Procedure using compositions containing 0.25 to 5 wt.% of the high molecular weight fluoroalkyl methacrylate polymer of EX-1. The samples were tested according to the Insulation Resistance Procedure. The results are summarized in Table 4B. The industry requirement is a minimum of 0.2 Giga Ohms. Even at concentrations as low as 0.25 wt.%, the resistance obtained with EX-1 was more than 10X greater than the minimum required.

**Table 4B: Resistance measured according to the Insulation Resistance Procedure at 250 V DC.**

| Sample | Resistance (Giga Ohms) | | | |
|---|---|---|---|---|
| EX-1 at 0.25 wt.% | 2.2 | 2.8 | 1.9 | 2.3 |
| EX-1 at 0.5 wt.% | 27.8 | 39.7 | 28.1 | 31.9 |
| EX-1 at 1.0 wt.% | 42.0 | 51.0 | 50.9 | 48.0 |
| EX-1 at 2.0 wt.% | 203 | 128 | 175 | 169 |
| EX-1 at 5.0 wt.% | 173 | 162 | 112 | 149 |

Further samples were prepared according to the Fluoropolymer Preparation Procedure. The reaction components are summarized in Table 5. The amounts of the fluoroalkyl (meth)acrylate monomer and any comonomers are reported in grams and weight percent based on the total weight of the monomers. No chain transfer agent was used. The amount of the Initiator (2,2'-azobis(3-methylbutyronitrile)) is reported in grams. For each sample, the initiator was added in two separate charges to provide 0.5 wt.% Initiator per charge based on the total weight of the monomers. All samples were prepared in HFE-2 at 10% solids.

**Table 5: Compositions used in the Fluoropolymer Preparation Procedure.**

| | FA(M)A | | | CM | | | Initiator (grams) | | Solv. (g) |
|---|---|---|---|---|---|---|---|---|---|
| Sample | I.D. | grams | wt.% | I.D. | grams | wt.% | Charge 1 | Charge 1 | HFE-2 |
| EX-2 | FA(M)A-1 | 39.20 | 98.0 | CM-1 | 0.80 | 2.0 | 0.20 | 0.20 | 360.0 |
| EX-3 | FA(M)A-1 | 14.93 | 99.5 | CM-1 | 0.08 | 0.5 | 0.075 | 0.075 | 135.0 |
| EX-4 | FA(M)A-1 | 14.85 | 99.0 | CM-2 | 0.15 | 1.0 | 0.075 | 0.075 | 135.0 |
| EX-5 | FA(M)A-1 | 14.97 | 99.8 | CM-3 | 0.03 | 0.2 | 0.075 | 0.075 | 135.0 |
| EX-6 | FA(M)A-1 | 6.98 | 99.7 | CM-3 | 0.02 | 0.3 | 0.035 | 0.035 | 63.0 |
| EX-7 | FA(M)A-1 | 14.97 | 99.8 | CM-4 | 0.03 | 0.2 | 0.075 | 0.075 | 135.0 |
| EX-8 | FA(M)A-1 | 6.86 | 98.0 | CM-5 | 0.14 | 2.0 | 0.035 | 0.035 | 63.0 |
| EX-9(*) | FA(M)A-1 | 6.84 | 97.7 | CM-3 | 0.02 | 0.3 | 0.035 | 0.035 | 63.0 |
| | | | | CM-5 | 0.14 | 2.0 | | | |
| EX-10 | FA(M)A-1 | 9.80 | 98.0 | CM-6 | 0.20 | 2.0 | 0.050 | 0.050 | 90.0 |
| EX-11 | FA(M)A-1 | 14.63 | 97.5 | CM-7 | 0.38 | 2.5 | 0.075 | 0.075 | 135.0 |
| CE-4 | FA(M)A-1 | 14.25 | 95.0 | CM-7 | 0.75 | 5.0 | 0.075 | 0.075 | 135.0 |
| EX-12 | FA(M)A-1 | 6,86 | 98.0 | CM-8 | 0.14 | 2.0 | 0.075 | 0.075 | 63.0 |

| | | | | | | | | | |
|---|---|---|---|---|---|---|---|---|---|
| (*) two comonomers were used. | | | | | | | | | |

The molecular weight of the copolymer of EX-2 (average of 2 replicates) and EX-12 were measured according to the Molecular Weight Procedure. The results are summarized in Table 6. Both samples have a weight average molecular weight of at least 100,000. The change in comonomer is not expected to have a significant impact on the weight average molecular weight, particularly at the low weight percent at which they are added.

**Table 6: Molecular weight of samples EX-2 and EX-12.**

| Sample | Mn (g/mole) | Mw (g/mole) | Mw/Mn |
|---|---|---|---|
| EX-2 | 31,000 | 130,000 | 4.2 |
| EX-12 | 35,400 | 136,000 | 3.9 |

Coated PCB samples were prepared according to the Coating Procedure using compositions containing 5 wt.% of the fluoroalkyl methacrylate polymers of Table 5 and tested according to the Coating Reliability Test Procedure. None of the samples resulted in an immediate short upon immersion in water. The voltages measured across the shunt after 1 minute, 5 minutes, and 10 minutes, as well as the sum of these three values are summarized in Table 7. Excluding CE-4, the sum of the voltages was less than 15 V for all samples, and less than 10 V for nine of the eleven samples. The voltage after 10 minutes was less than 10 V for all samples - including CE-4, and less than 4 V for eight of the samples. Thus, coatings based on these high molecular weight fluoroalkyl methacrylate copolymers had very good to excellent moisture resistance.

**Table 7: Voltage measured according to the Coating Reliability Test Procedure.**

| | Voltage (Volts) | | | |
|---|---|---|---|---|
| Sample | 1 min. | 5 min. | 10 min. | Sum |
| EX-2 | 0.70 | 0.69 | 0.44 | 1.8 |
| EX-3 | 0.1 | 0.1 | 0.53 | 0.7 |
| EX-4 | 0.13 | 0.38 | 3.08 | 3.6 |
| EX-5 | 0.17 | 0.54 | 5.66 | 6.4 |
| EX-6 | 0.93 | 3.20 | 7.87 | 12.0 |
| EX-7 | 0.24 | 0.32 | 0.43 | 1.0 |
| EX-8 | 1.13 | 2.38 | 3.35 | 6.9 |
| EX-9 | 2.81 | 1.97 | 3.71 | 8.5 |
| EX-10 | 0.29 | 4.29 | 7.01 | 11.6 |
| EX-11 | 0.62 | 0.65 | 0.64 | 1.9 |
| CE-4 | 2.79 | 8.29 | 8.28 | 19.4 |
| EX-12 | 2.24 | 2.42 | 2.28 | 6.9 |

Sample CE-4 was similar to Sample EX-11, except CE-4 included 5 wt.% of the butyl acrylate comonomer, while Sample EX-11 had only 2.5 wt.% of the same comonomer. The solubility of the copolymer of CE-4 was poor. It is believed this contributed to the poorer results. However, the coated sample of CE-4 still outperformed the lower molecular weight samples.

The effect of the glass transition temperature of the fluoro(meth)acrylate polymers was evaluated by preparing further samples over a range of Tg and molecular weight. Each fluoroalkyl (meth)acrylate polymer was prepared according to the Fluoropolymer Preparation Procedure. The initiator (2,2'-azobis(3-methylbutyronitrile)) was added in two separate charges to provide 0.5 wt.% Initiator per charge based on the total weight of the monomer.

Four homopolymers were prepared at 10% solids in HFE-2 solvent using different fluoroalkyl (meth)acrylate monomers (CE-5, 6a, 7a, and 8a). Three of these homopolymers were also prepared with the addition of the n-octylmercaptan chain transfer agent (CTA) (CE-6b, 7b, and 8b) The resulting lower molecular weight samples could be prepared at 15% solids in HFE-2 solvent.

The molecular weight of each sample was measured according to the Molecular Weight Procedure. The samples were diluted to 5 wt.% in HFE-2 solvent and coated PCB samples were prepared according to the Coating Procedure. The coated PCB samples were tested according to the Coating Reliability Test Procedure. In addition, the glass transition temperature of these samples and the fluoroalkyl (meth)acrylate polymers of EX-1 and CE-3 were measured according to the Glass Transition Temperature Procedure. The results are summarized in Table 8. CoRe refers to the results of the Coating Reliability Test Procedure. The reported value is the sum of the voltages measured according to the Coating Reliability Test Procedure after 1, 5 and 10 minutes.

**Table 8: Effects of Mw and Tg of fluoroalkyl (meth)acrylate polymers.**

| Sample | Monomer | Mn | Mw | Mw/Mn | Tg(°C) | CoRe (V) |
|---|---|---|---|---|---|---|
| EX-1 | FA(M)A-1 | 82,000 | 458,000 | 5.6 | 60 | 6.4 |
| CE-3 | FA(M)A-1 | 21,000 | 32,000 | 1.5 | 54 | 25.4 |
| CE-5 | FA(M)A -2 | 42,000 | 210,000 | 5.0 | 27 | 24.8 |
| CE-6a | FA(M)A -5 | 67,000 | 145,000 | 2.2 | 22 | 24.6 |
| CE-6b | FA(M)A -5 | 21,000 | 26,000 | 1.2 | 6 | 26.5 |
| CE-7a | FA(M)A -4 | 68,000 | 160,000 | 2.3 | 19 | 24.0 |
| CE-7b | FA(M)A -4 | 20,000 | 26,000 | 1.3 | -2 | 26.3 |
| CE-8a | FA(M)A -3 | 62,000 | 197,000 | 3.2 | -26 | 25.7 |
| CE-8b | FA(M)A -3 | 22,000 | 29,000 | 1.3 | -32 | 26.8 |

Comparing Example EX-1 and Comparative Example CE-3, the lower molecular weight comparative example failed despite having approximately the same Tg as the higher molecular weight sample. Comparing Example EX-1 and the samples of Table 7 with Comparative Examples CE-5, CE-6a, CE-7a, and CE-8a, the lower Tg samples failed despite having molecular weights (Mw) of greater than 100,000 g/mole.

A sample was prepared using a 98/2 copolymer of 2,2,3,4,4,4-Hexafluorobutyl Acrylate (CF₃CFHCF₂CH₂OC(O)CH=CH₂)/Acrylic Acid. Such polymers may be prepared by the methods described in EP 1311637. The molecular weight of the copolymer as measured according to the Molecular Weight Procedure was Mn = 16,000; Mw = 25,300; and Mw/Mn = 1.6.

A 5 wt.% solution of the polymer was prepared in the HFE-1 solvent (CE-9) and in the HFE-2 solvent (CE-10). Coated PCB samples were prepared according to the Coating Procedure and tested according to the Coating Reliability Test Procedure. The voltages measured across the shunt after 1 minute, 5 minutes, and 10 minutes, as well as the sum of these three values are summarized in Table 9.

**Table 9: Voltage measured according to the Coating Reliability Test Procedure.**

| | Voltage (Volts) | | | |
|---|---|---|---|---|
| Sample | 1 min. | 5 min. | 10 min. | Sum |
| CE-9 | 5.67 | 8.37 | 8.45 | 22.5 |
| CE-10 | 6.95 | 7.68 | 7.83 | 22.5 |

Various modifications and alterations of this invention will become apparent to those skilled in the art without departing from the scope and spirit of this invention.

## Claims

1. A fluoroalkyl (meth)acrylate polymer comprising a polymerization product of at least 96 weight percent of one or more fluoroalkyl (meth)acrylate monomers, wherein the fluoroalkyl group has 1 to 6 carbon atoms and the polymer has a weight average molecular weight of at least 100,000 grams per mole as measured according to the Molecular Weight Procedure and a glass transition temperature of at least 40 °C as measured according to the Glass Transition Temperature Procedure.

2. The fluoroalkyl (meth)acrylate polymer of claim 1, wherein the polymer comprises a polymerization product of at least 99 weight percent of the one or more fluoroalkyl (meth)acrylate monomers.

3. The fluoroalkyl (meth)acrylate polymer of claim 2, wherein the polymer is a homopolymer of one of the fluoroalkyl (meth)acrylate monomers.

4. The fluoroalkyl (meth)acrylate polymer according to any one of the preceding claims, wherein at least one of the fluoroalkyl (meth)acrylate monomers is a fluoroalkyl methacrylate monomer.

5. The fluoroalkyl (meth)acrylate polymer of claim 4, wherein the fluoroalkyl methacrylate monomer has the formula:
CₙF₂ₙ₊₁-Q-R₁-O-CO-C(CH₃)=CH₂
wherein: CₙF₂ₙ₊₁ is a perfluorinated alkyl group where n = 1 to 6;
Q is a covalent bond or a divalent linking group; and
R₁ is a alkylene group having 1 to 4 carbon atoms.

6. The fluoroalkyl (meth)acrylate polymer of claim 5, wherein the fluoroalkyl methacrylate monomer is N-methyl perfluorobutyl sulfonamido ethyl methacrylate.

7. The fluoroalkyl (meth)acrylate polymer according to any one of the preceding claims, wherein the polymer has a weight average molecular weight of at least 300,000 grams per mole as measured according to the Molecular Weight Procedure.

8. The fluoroalkyl (meth)acrylate polymer according to any one of the preceding claims, wherein the polymer has a glass transition temperature of at least 50 °C as measured according to the Glass Transition Temperature Procedure.

9. A composition comprising the fluoroalkyl (meth)acrylate polymer according to any one of the preceding claims dissolved in a fluorinated solvent.

10. The composition of claim 9, wherein the composition comprises at least 4% by weight of the fluoroalkyl (meth)acrylate polymer dissolved in the fluorinated solvent, based on the total weight of the polymer and the solvent.

11. A method of preparing a coated substrate comprising: applying the composition according to claim 9 or 10 on to a surface of the substrate and removing the solvent to form a film of the polymer adhered to the surface.

12. A coated substrate made according to the method of claim 11.

13. A coated substrate comprising a substrate having a first surface and a film of the fluoroalkyl (meth)acrylate polymer according to any one of claims 1 to 8 adhered to the surface.

14. The coated substrate of claim 12 or 13, wherein the substrate comprises one or more electrical components on the surface of the substrate

15. The coated substrate of claim 14, wherein the substrate is a printed circuit board.
